# EUROPÄISCHE PATENTSCHRIFT

(11) **EP 1 669 013 B1**
(45) Veröffentlichungstag und Bekanntmachung des Hinweises auf die Patenterteilung: **17.09.2008**
(21) Anmeldenummer: 05026893.7
(22) Anmeldetag: 08.12.2005
(51) Int. Cl.: A47J 37/06, A47J 36/12

(54) **Vorrichtung zur Nahrungsmittelzubereitung**
Device for preparing foodstuff
Dispositif pour préparer des aliments

(30) Priorität: 08.12.2004 DE 202004019020 U
(43) Veröffentlichungstag der Anmeldung: 14.06.2006
(73) Patentinhaber: 3rd Angle (U.K.) Ltd., Highley, Shropshire WV16 6NN (GB)
(72) Erfinder: Currie, Neil Anthony, Worcestershire DY13 0NA (GB)
(74) Vertreter: Reitstötter - Kinzebach

(56) Entgegenhaltungen:
- EP-A- 1 400 195
- FR-A- 2 790 932
- FR-A- 2 866 539

## Beschreibung

Die vorliegende Erfindung betrifft eine Vorrichtung zur Nahrungsmittelzubereitung mit einem Gehäuse, das eine Gerätebasis und wenigstens einen Deckel aufweist, der über ein Drehgelenk schwenkbar mit der Gerätebasis verbunden ist, wobei die Gerätebasis und der Deckel zumindest eine geschlossene Position, in welcher sich eine Unterseite des Deckels und eine Oberseite der Gerätebasis gegenüberliegen, und eine geöffnete Position, in welcher der Deckel und die Oberseite der Gerätebasis einen Öffnungswinkel einschließen, einnehmen können, und wobei das Drehgelenk elastische Rückstellmittel umfasst, die auf den Deckel eine Betätigungskraft in Richtung der geöffneten Position ausüben.

Derartige Vorrichtungen sind beispielsweise typische Haushaltsgeräte wie Wasserkocher, Kaffeemaschinen, Tee-Perkolatoren, Sandwichtoaster, Waffeleisen oder Tischgrillgeräte.

Entsprechende Sandwichtoaster und Waffeleisen, bei denen die Gerätebasis vorteilhaft als Fußteil ausgebildet ist und Heizplatten zum Erhitzen der Speisen im Deckel und/oder Fußteil vorgesehen sind, werden beispielsweise in dem Patent US 6,820,537 und in dem dort zitierten Stand der Technik beschrieben. Aus diesem Stand der Technik ist auch bekannt, dass die, üblicherweise sowohl im Fußteil als auch im Deckel angeordneten Heizplatten austauschbar ausgebildet sein können, so dass ein und dasselbe Gerät wahlweise als Sandwichtoaster, als Waffeleisen oder als Grill zum Braten von Fleisch oder Gemüse verwendet werden kann. Insbesondere beim Einsatz als Toaster oder als Waffeleisen sind die Heizplatten als Formteile ausgebildet, so dass mit austauschbaren Heizplatten unterschiedlich geformte Toasts und Waffeln hergestellt werden können. Die zu erhitzenden Speisen legt man üblicherweise auf die Heizplatte des Fußteils und schließt den Deckel. Nach Einschalten des Gerätes werden die in dem zwischen der Oberseite des Fußteils und der Unterseite des Deckels definierten Raum befindlichen Speisen erhitzt und, je nach Art der Speisen, gegebenenfalls geröstet oder gebraten. In der Praxis ist es aber erforderlich, dass der Benutzer den Fortschritt des Zubereitungsprozesses der Speisen regelmäßig kontrolliert, um beispielsweise sicherzustellen, dass der gewünschte Bräunungsgrad eines Toasts oder ein bestimmter Garzustand des Fleisches erreicht wird. In der Regel wird daher während der Herstellung eines Toasts oder beim Braten von Fleischstückchen der Deckel mehrfach geöffnet und wieder geschlossen. Zwar sind bereits Geräte mit Zeitschaltuhren auf dem Markt, die es erlauben, die Gesamtdauer des Heizvorgangs festzulegen, aber auch in diesen Fällen können sich zumindest weniger erfahrene Benutzer nicht darauf verlassen, dass allein durch die Vorgabe der Gesamtheizdauer auch das gewünschte Resultat erreicht wird. Vielmehr ist auch der Benutzer solcher Geräte gezwungen, den Fortschritt des Zubereitungsprozesses regelmäßig zu überprüfen.

Da es im Allgemeinen nicht ausreicht, den Deckel nur lose auf die zu erhitzende Speise aufzulegen, weisen die meisten der bekannten Geräte einen Verriegelungsmechanismus auf, der es dem Benutzer erlaubt, die zu erhitzenden Speisen zwischen Deckel und Fußteil zusammenzupressen und den Deckel in der geschlossenen Position zu halten. Je nach Größe der zu erhitzenden Speisen, beispielsweise je nach Dicke der Toastbrotscheiben, kann das Verriegeln des Deckels Mühe bereiten und vom Benutzer den Einsatz beider Hände zum Schließen des Deckels erfordern, während gleichzeitig der Verriegelungsmechanismus betätigt werden muss.

Ein solches Gerät ist beispielsweise auch aus FR-A- 2 790 932 bekannt.

Da der Vorgang des Öffnens und des Schließens des Deckels schon bei der Zubereitung einer einzelnen Speise mehrfach durchgeführt werden muss, ist die Handhabung derartiger Vorrichtungen unbefriedigend.

Eine vereinfachte Handhabung von Waffeleisen oder Sandwichtoastern wird demgegenüber durch die beispielsweise in DE-A 926 031 oder EP-A 1 400 195 beschriebenen Vorrichtungen gewährleistet, bei welcher der Deckel des Waffeleisens federbelastet ist und beim Entriegeln des Deckels automatisch aufspringt. Problematisch ist dabei die Wahl der richtigen Federkraft. Ist die Federkraft zu gering, kann die Feder das manuelle Öffnen allenfalls unterstützen, was die Handhabung derartiger Geräte aber nicht verbessert. Ist die Federkraft aber zu groß, kann der Deckel unkontrolliert aufspringen und den Benutzer gefährden, da dieser nicht nur mit dem aufspringenden Deckel, sondern auch mit im Deckelintegrierten Heizelementen oder mit den von der Vorrichtung erhitzten Nahrungsmittel ungewollt in Kontakt kommen kann.

Der Erfindung liegt daher das technische Problem zu Grunde, eine Vorrichtung der eingangs beschriebenen Art anzugeben, die einfacher geöffnet und wieder verschlossen werden kann und so die tägliche Benutzung von mit einem derartigen Deckel versehenen Haushaltsgeräten, insbesondere Sandwichtoastern, Waffeleisen oder Tischgrillgeräten, wesentlich erleichtert und gleichzeitig sicherer gestaltet.

Gelöst wird dieses technische Problem durch die Vorrichtung zur Zubereitung von Nahrungsmitteln gemäß dem vorliegenden Anspruch 1. Vorteilhafte Weiterbildungen der erfindungsgemäßen Vorrichtung werden in den abhängigen Ansprüchen beschrieben.

Erfindungsgemäß wird vorgeschlagen, das Drehgelenk der Vorrichtung der eingangs beschriebenen Art mit Dämpfungsmitteln auszurüsten, welche eine durch die elastischen Rückstellmittel bewirkte Bewegung des Deckels dämpfen und die außerdem einstellbar sind.

Das Öffnen des Deckels der erfindungsgemäßen Vorrichtung erfordert demnach keinen größeren Aufwand vom Benutzer, da die Vorspannung der elastischen Rückstellmittel dafür sorgt, dass der Deckel automatisch in Richtung der geöffneten Position ausschwenkt. Üblicherweise ist bei derartigen Vorrichtungen ein Anschlag vorgesehen, der den maximalen Öffnungswinkel des Deckels typischerweise in einem Bereich zwischen 45 und 135°, vorzugsweise in einem Bereich zwischen 90 und 110° begrenzt. Da die elastischen Rückstellmittel erfindungsgemäß gedämpft sind, ist sichergestellt, dass das automatische Öffnen des Deckels sanft verläuft und weder die Gefahr besteht, dass das gesamte Gerät beim Öffnen taumelt, wackelt oder gar beim abrupten Erreichen des Anschlags nach hinten kippt. Beim Öffnen des Deckels der erfindungsgemäßen Vorrichtung können demnach keine unkontrollierten Bewegungen des Gerätes auftreten, die zu einer Gefährdung des Benutzers, beispielsweise im Fall eines Tischgrills durch ungewollten Kontakt mit den Heizplatten, führen können. Daher ist auch ein mehrfaches Öffnen des Deckels im Laufe eines Zubereitungsprozesses der Nahrungsmittel problem- und gefahrlos möglich.

Gemäß der Erfindung kann die Dämpfung der elastischen Rückstellmittel vom Benutzer verändert werden, so dass die Geschwindigkeit, mit welcher sich der Deckel öffnet, einstellbar ist. Dazu umfassen die Dämpfungsmittel wenigstens ein Einstellmittel zur Veränderung der auf die Rückstellmittel wirkenden Dämpfung.

Gemäß einer weiteren bevorzugten Ausführungsform der Erfindung umfasst das Drehgelenk zumindest zwei gegeneinander drehbare Zylinder, zwischen denen die elastischen Rückstellmittel angreifen, wobei vorzugsweise die Gerätebasis mit dem ersten Zylinder und der Deckel mit dem zweiten Zylinder verbunden ist. Gemäß einer besonders bevorzugten Variante besteht das Drehgelenk aus drei horizontal nebeneinander angeordneten Zylindern, wobei der Deckel mit dem mittleren Zylinder und die Gerätebasis mit den beiden äußeren Zylindern verbunden ist, die sich jeweils an die Stirnflächen des mittleren Zylinders anschließen. Gemäß einer Variante kann auch die Gerätebasis mit dem zweiten (oder, im Falle von drei Zylindern, dem mittleren) Zylinder und der Deckel mit dem ersten (oder, im Falle von drei Zylindern, den beiden äußeren Zylindern) verbunden sein.

Als elastisches Rückstellmittel kann beispielsweise wenigstens eine Drehfeder oder Spiralfeder dienen, deren eines Ende mit dem ersten Zylinder und deren anderes Ende mit dem zweiten Zylinder verbunden ist. Bevorzugt verwendet man jeweils eine Drehfeder an jedem Ende des Drehgelenks. Beispielsweise können die Enden jeder Drehfeder in entsprechende, in den Zylindern ausgesparte Montageöffnungen eingreifen. Wenn das Drehgelenk aus drei Zylindern besteht, ist vorteilhaft zwischen dem zweiten (mittleren) Zylinder und dem seitlich angeordneten dritten Zylinder eine zweite Drehfeder vorgesehen.

Bevorzugt wird die Dämpfung der Rückstellmittel durch Reibung bewirkt, die an einer Kontaktfläche zwischen dem ersten Zylinder und dem zweiten Zylinder (und/oder dem zweiten Zylinder und einem gegebenenfalls dritten Zylinder) bei einer Drehung der Zylinder gegeneinander auftritt. Vorteilhaft ist an den Kontaktflächen eine viskose Flüssigkeit, wie beispielsweise ein Öl, oder ein Gel vorhanden, so dass beim Öffnen des Deckels praktisch keine Haftreibung überwunden werden muss und die Dämpfung über den gesamten Schwenkbereich des Deckels im Wesentlichen konstant ist. Dem Fachmann sind aber zahlreiche alternative Möglichkeiten bekannt, die Drehbewegung des Deckels zu dämpfen. Gemäß einer Variante kann die Dämpfung beispielsweise auch über eine erzwungen Strömung es viskosen Fluids oder durch Bewegen von mit den Zylindern verbunden Bauteilen durch ein ruhendes viskoses Fluid erreicht werden.

Die Veränderung der Dämpfung erfolgt bevorzugt über ein Einstellmittel, durch welches die Reibung an der Kontaktfläche zwischen dem ersten und zweiten Zylinder veränderbar ist. Dazu kann das Einstellmittel beispielsweise einen mit dem ersten Zylinder verbundenen Drehkopf umfassen, der auf eine Zugstange aufgeschraubt ist, welche zumindest den zweiten Zylinder oder einen gegebenenfalls vorgesehenen dritten Zylinder hintergreift. Durch Drehen des Drehknopfes wird dann der zweite Zylinder, abhängig von der Drehrichtung, mit einer mehr oder weniger großen Kraft zu dem ersten Zylinder hingezogen, so dass auch die Kraft, welche die Kontaktflächen senkrecht zueinander ausüben, und damit die resultierende Reibungskraft, sich entsprechend verändert. Auch bei den Varianten, bei denen die Reibung im Wesentlichen durch die Viskosität eines strömenden Fluids oder die Bewegung von Körpern in einem Fluid bestimmt wird, kann die Dämpfung beispielsweise durch Veränderung der freien Querschnittsflächen durch die das Fluid strömt oder durch Ändern der Querschnittsflächen der bewegten Körper in der Bewegungsrichtung variiert werden.

Gemäß einer ersten Variante der erfindungsgemäßen Vorrichtung ist die Rückstellkraft der elastischen Rückstellmittel so bemessen, dass die Rückstellkraft bei geschlossenem Deckel nicht ausreicht, den Deckel gegen die Schwerkraft in die geöffnete Position zurückzuführen. In diesem Fall muss der Benutzer den Deckel zum Öffnen leicht anheben. Mit zunehmendem Öffnungswinkel verringert sich die Gewichtskraftkomponente des Deckels in Richtung geschlossener Position, so dass ab einem bestimmten Öffnungswinkel die Rückstellkraft der elastischen Rückstellmittel überwiegt und den Deckel automatisch in die vollständig geöffnete Position zurückführt. Ein Zusammenpressen der zu erhitzenden Speisen ist gemäß dieser Variante aber nicht möglich.

Daher sind gemäß einer bevorzugten Ausführungsform der Erfindung in dem Deckel und in der Gerätebasis und/oder in dem Drehgelenk komplementäre Bauelemente eines Verriegelungsmittels angeordnet, das den Deckel in der geschlossenen Position hält. Vorzugsweise ist außerdem ein mit dem Verriegelungsmittel zusammenwirkendes Betätigungsmittel zum Öffnen des Verriegelungsmittels vorgesehen. Gemäß dieser Variante kann der Benutzer den Deckel gegen die Rückstellkraft des elastischen Rückstellmittels in die geschlossene Position drücken und durch das Verriegelungsmittel in dieser Position verriegeln. Das Verriegelungsmittel kann beispielsweise aus einer Klammer im Deckel bestehen, der ein geeignetes Haltemittel in der Gerätebasis umgreifen kann. Das Verriegelungsmittel kann auch aus einer Öffnung in der Gerätebasis des Gehäuses bestehen, in die ein im Deckel vorgesehener beweglicher Hacken eingreifen kann. Gemäß einer anderen Variante ist das Verriegelungsmittel als Gesperre ausgebildet, beispielsweise als geradliniges oder radartiges Zahngesperre, in welches eine bewegliche Klinke in verschiedenen Positionen eingreifen kann. Je nach Ausführungsform des Gesperres können beispielsweise anstelle einer einzigen geschlossene Position des Deckels mehrere alternativ wählbar geschlossene Positionen realisiert werden, was es dem Benutzer ermöglich die zu zubereitenden Speisen mehr oder weniger fest zusammenzudrücken. Die Klinge greift dabei vorzugsweise selbsttätig, beispielsweise durch ein geeignete Federvorspannung, in der gewünschte Position in das Zahngesperre ein und verriegelt den Deckel so in der jeweiligen Position. Der Benutzer braucht also lediglich den Deckel hinabzudrücken und muss selbst keinen Verriegelungsmechanismus betätigen. Mit dem Betätigungsmittel kann das Verriegelungsmittel entriegelt werden, beispielsweise durch Herausziehen der komplementären Klinke aus dem Zahngesperre. Nach der Entriegelung bewirken die am Deckel angreifende Rückstellmittel, dass der Deckel automatisch in die geöffnete Position bewegt wird. Das Verriegelungsmittel, also beispielsweise das Zahngesperre, kann außerdem so ausgebildet sein, dass der Deckel außer in der vollständig geöffneten auch in einer teilweise geöffneten Position, beispielsweise bei einem Öffnungswinkel zwischen 20 und 50°, festlegbar ist. Zur Kontrolle des Zubereitungsprozesses reicht es nämlich in der Regel aus, den Deckel lediglich teilweise zu öffnen. In diesem Fall kann man beispielsweise vorsehen, dass der Deckel nach einmaligem Betätigen des Betätigungsmittels die teilweise geöffnete Position erreicht und erst nach nochmaligem Betätigen des Betätigungsmittels in die vollständig geöffnete Position schwenkt.

Gemäß einer bevorzugten Variante der Erfindung ist das Betätigungsmittel als Druckknopf ausgebildet, was eine besonders einfache Handhabung der erfindungsgemäßen Vorrichtung garantiert.

Die erfindungsgemäße Lösung mit elastisch vorgespanntem Deckel mit vom Benutzer einstellbarer Dämpfung kann in einer Vielzahl von an sich bekannten unterschiedlichen Haushaltsgeräten realisiert werden, wie beispielsweise Friteusen, Wasserkochern, Kaffeemaschinen usw.

Üblicherweise arbeiten die bekannten gattungsgemäßen Vorrichtungen wie Sandwichtoaster, die eine oder mehrere Heizplatte aufweisen, mit einer bestimmten voreingestellten Temperatur, die üblicherweise über einen Thermostaten kontrolliert wird. Eine voreingestellte Temperatur erweist sich allerdings als nachteilig, wenn unterschiedliche Speisen zubereitet werden. So stellt man beispielsweise fest, dass Fleisch vorzugsweise bei höheren Temperaturen im Bereich von 220°C zubereitet werden sollte, während Toastbrote üblicherweise in einem Bereich von 175 bis 185°C zubereitet werden, wobei teilweise zur Vermeidung von schädlichen Nebenprodukten wie Acrylamid, sogar noch niedrigere Temperaturen bevorzugt sind. Gemäß einer besonders vorteilhaften Ausführungsform der Erfindung sind daher Mittel zur Regelung der Temperatur der wenigstens einen Heizplatte vorgesehen, die es dem Benutzer erlauben, unterschiedliche Temperaturen vorzugeben. Es kann beispielsweise ein Bimetall-Thermostat in thermischem Kontakt mir der Heizplatte vorgesehen sein, der über eine Temperaturregler eingestellt wird. Der Temperaturregler kann als Drehregler ausgebildet sein.

Eine Veränderbarkeit der Heiztemperatur erweist sich insbesondere dann als vorteilhaft, wenn die erfindungsgemäße Vorrichtung, wie nach einer weiteren bevorzugten Ausführungsform vorgesehen, wenigstens eine austauschbare Heizplatte aufweist. In diesem Fall kann das Gerät je nach Vorgabe des Benutzers beispielsweise als Toaster, Waffeleisen oder als Tischgrill arbeiten. Die Heizplatte kann integrierte Heizelemente aufweisen, beispielsweise eine Widerstandsheizung oder eine Induktionsheizung. Insbesondere im Fall einer austauschbaren Heizplatte wird man die Platte jedoch lediglich aus einem thermisch gut leitenden Material herstellen und die eigentlichen Heizelemente als nicht austauschbar Bauteile im Fußteil und/oder im Deckel der Vorrichtung anordnen. Die Heizelemente sind dabei so ausgebildet, dass ein guter thermischer Kontakt zwischen den Heizelementen und der Heizplatte gewährleistet ist. Beispielsweise können auf den Innenseiten der Heizplatten entsprechende Ausnehmungen für Windungen einer Heizspirale oder ähnliches ausgespart sein. Die Heizelemente werden in an sich bekannter Weise mit elektrischem Strom versorgt.

Die Heizplatte kann als Formteil ausgebildet sein, so dass die zu erhitzenden Speise, wie Sandwiches, Toastbrote oder den Waffeln, durch den Zubereitungsvorgang gleichzeitig in bestimmter Weise geformt werden können. Üblicherweise sind dann im Deckel und im Fußteil ein oder mehrere Formen ausgebildet, wobei im Fall von mehreren Formen zwischen den Formen ein Steg ausgebildet sein kann, der beim Zusammenpressen von Deckel und Fußteil ein Trennen der zuzubereitenden Speisen in einzelne Stücke ermöglicht.

Die Heizplatte weist auf der mit den zu zubereitenden Speisen in Kontakt kommenden Fläche vorzugsweise eine an sich bekannte Antihaftbeschichtung auf.

Gemäß einer weiteren bevorzugten Ausführungsform weist die erfindungsgemäße Vorrichtung im Boden des Fußteils eine ausziehbare oder abnehmbare Tropfschale auf, in der bei der Zubereitung der Speisen zugegebene oder freigesetzte Flüssigkeiten, wie austretendes Fett und ähnliches, gesammelt werden können. Dazu ist vorzugsweise in der im Fußteil angeordneten Heizplatte eine Öffnung vorgesehen, die über einen im Fußteil ausgesparten Kanal mit der Tropfschale kommuniziert. Durch die Öffnung und den Kanal können somit Flüssigkeiten in die Tropfschale abgeleitet werden.

Die Erfindung wird im Folgenden unter Bezugnahme auf eine in der beigefügten Zeichnung dargestellte bevorzugte Ausführungsform eines Sandwichtoasters näher erläutert, wobei der Sandwichtoaster exemplarisch für andere Haushaltsgeräte steht, die mit der erfindungsgemäßen Deckelkonstruktion versehen sein können.

In der Zeichnung zeigt
- Figur 1: einen erfindungsgemäßen Sandwichtoaster bei geschlossenem Deckel;
- Figur 2: den Sandwichtoaster der Figur 1 bei geöffnetem Deckel;
- Figur 3: einen Längsschnitt durch das Drehgelenk des Sandwichtoasters der Figuren 1 und 2
- Figur 4: eine Variante des Drehgelenks der Figur 3 im Teillängsschnitt; und
- Figur 5: eine Explosionsdarstellung der beiden Zylinder des Drehgelenks der Figur 4.

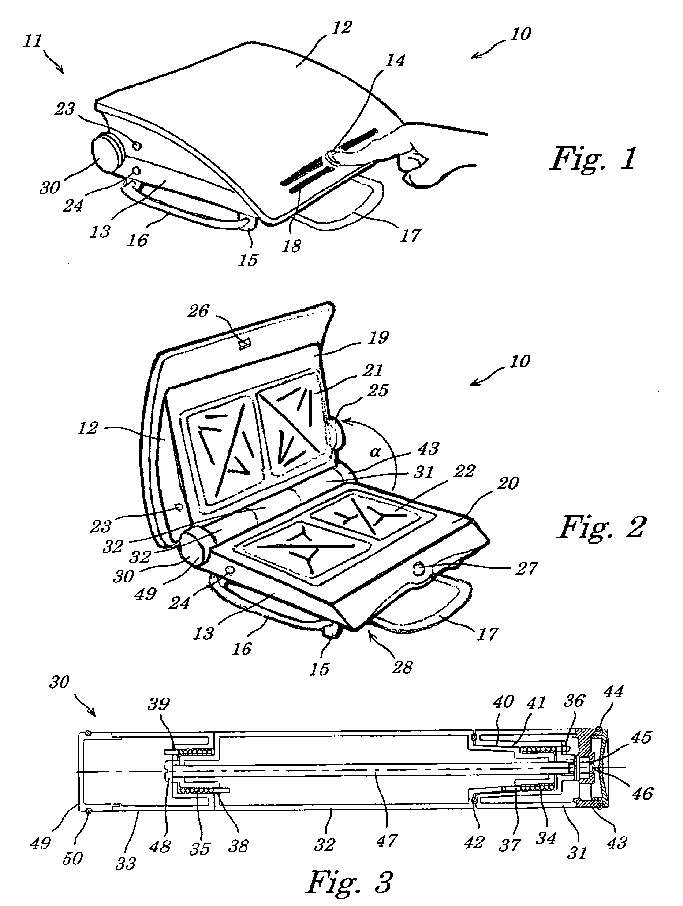

In Figur 1 erkennt man einen insgesamt mit der Bezugsziffer 10 bezeichneten Sandwichtoaster, der ein Gehäuse 11 umfasst, das einen Deckel 12 und ein Fußteil 13 aufweist. Der Deckel 12 und das Fußteil 13 sind über ein weiter unten im Zusammenhang mit der Figur 3 näher beschriebenes Drehgelenk 30 miteinander verbunden. In dem in Figur 1 dargestellten geschlossenen Zustand wird der Deckel durch ein in Figur 2 besser erkennbaren Verriegelungsmittel in seiner Position gehalten. Über einen Druckknopf 14 kann der Verriegelungsmechanismus entriegelt werden, so dass der Deckel über in dem Drehgelenk 30 angeordnete Rückstellmittel in die geöffnete Position aufklappen kann. Wie man in Figur 1 außerdem erkennt, weist das Fußteil Standfüße 15 auf, an denen seitliche Haltegriffe 16 angreifen. An der Stirnseite des Fußteils ist eine herausziehbare Tropfschale 17 angeordnet, welche, beispielsweise bei Benutzung des Sandwichtoasters 10 als Fleischgrillgerät, die beim Bratvorgang austretenden Flüssigkeiten auffängt. Auch an der Oberseite des Deckels 12 sind Griffe beziehungsweise Leisten 18 angeordnet, welche dem Benutzer das Schließen des Deckels erleichtern.

Figur 2 zeigt den Sandwichtoaster 10 der Figur 1 bei geöffnetem Deckel. Man erkennt, dass im vollständig geöffneten Zustand zwischen der Oberseite des Fußteils 13 und der Unterseite des Deckels 12 ein Öffnungswinkel α von etwa 100 bis 110° gebildet wird. Auf der Unterseite 19 des Deckels 12 und der Oberseite 20 des Fußteils 13 sind jeweils Heizplatten 21 bzw. 22 angeordnet. Die Heizplatten 21, 22 sind in an sich bekannter Weise als Formteile ausgebildet, die den (nicht dargestellten) Toastbroten appetitliche Formen verleihen. Im dargestellten Beispiel sind die Heizplatten 21, 22 austauschbar im Deckel beziehungsweise Fußteil angeordnet und können nach Betätigen von seitlich angeordneten Entriegelungsknöpfen 23 beziehungsweise 24 herausgenommen und gegen andere Formen ausgetauscht werden. Seitlich am Deckel 12 ist ein Temperaturregler 25 angeordnet, mit dem die Heiztemperatur je nach Anwendungsfall variiert werden kann. Die Verriegelungsmittel bestehen im dargestellten Beispiel aus einem an der Unterseite des Deckels 12 angeordneten, durch den Betätigungsknopf 14 schwenkbaren Hacken 26, der im geschlossenen Zustand in eine komplementäre, im Fußteil 13 ausgesparte Öffnung 27 eingreifen kann. Auch in Figur 2 ist wiederum die am Boden 28 des Fußteils 13 vorgesehene Tropfschale 17 erkennbar.

Das Drehgelenk 30 ist in Figur 3 detaillierter im Querschnitt dargestellt. Wie man erkennt, ist das Drehgelenk dreiteilig ausgebildet. Es besteht aus einem ersten Zylinder 31, einem zweiten mittleren Zylinder 32 und einem dritten Zylinder 33. Der erste Zylinder und der dritte Zylinder 33 sind mit dem Fußteil 13 verbunden, während der mittlere Zylinder 32 mit dem Deckel 12 verbunden ist. Es versteht sich aber, dass alternativ auch die Zylinder 31, 33 mit dem Deckel und der mittlere Zylinder 33 mit dem Fußteil verbunden sein können. Zwischen dem ersten Zylinder 31 und dem zweiten Zylinder 32 sind eine erste Drehfeder 34 und zwischen dem dritten Zylinder 33 und dem zweiten Zylinder 32 eine zweite Drehfeder 35 angeordnet. Die beiden Enden jeder Drehfeder 34, 35 greifen in entsprechende in den Zylindern 31, 32, 33 ausgesparte Montageöffnungen 36, 37, 38, 39 ein. Die Drehfedern 34, 35 sind so vorgespannt, dass sie eine Drehung des mit dem Deckel 12 verbundenen mittleren Zylinders 32 in die geöffnete Stellung bewirken. Der mittlere Zylinder 32 weist einen zum ersten Zylinder 31 weisenden kegelstumpfartigen Endbereich auf, der mit einer komplementären Ausnehmung im ersten Zylinder zusammenwirkt und eine leicht schräg verlaufende Kontaktfläche 40 zwischen erstem Zylinder 31 und zweitem Zylinder 32 bildet. Die an der Kontaktfläche 40 auftretende Reibung bestimmt die Dämpfungskraft beim Öffnen des Deckels 12. An der Kontaktfläche ist ein Öl oder Gel 41 als Gleitmittel vorgesehen. Der Stirnbereich zwischen erstem Zylinder 31 und zweitem Zylinder 32 ist durch eine Abstreifdichtung 42 abgedichtet, so dass das Öl oder Gel 41 nicht austreten kann. Der erste Zylinder 31 weist daher an seinem freien Ende einen Drehknopf 43 auf, der zur Verbesserung Griffigkeit an seinem Außenumfang mit einem Gummiring 44 versehen ist. Durch Drehen des Drehknopfes 43 kann der Benutzer die Dämpfung durch Ändern der Reibungskraft an der Kontaktfläche 40 verändern. Dazu ist der mit einem Innengewinde 45 versehene Drehknopf 43 auf eine an einem Ende mit einem Außengewinde 46 versehene Zugstange 47 aufgeschraubt. Die Zugstange 47 durchquert den zweiten Zylinder 32 und die zum zweiten Zylinder gerichtete Stirnfläche des dritten Zylinders und hintergreift diese Stirnfläche mit einer Endkappe 48. Beim Drehen des Drehknopfes 43 des ersten Zylinders 31 im Uhrzeigersinn wird der erste Zylinder 31 weiter in die Zugstange hineingedreht, so dass die drei Zylinder 31, 32, 33 etwas stärker zusammengepresst werden, was die Normalkraft an der Kontaktfläche 40 und damit die Reibungskraft erhöht. Die Dämpfung wird also verstärkt und der Deckel 12 öffnet sich langsamer. Entsprechend wird durch Drehen des ersten Zylinders 31 gegen den Uhrzeigersinn die Dämpfung verringert und der Deckel 12 kann sich schneller öffnen.

Aus Gründen der optischen Symmetrie ist der dritte Zylinder 33 im dargestellten Beispiel mit einer Drehknopfattrappe 49 und einem dem Gummiring 44 entsprechenden Gummiring 50 versehen.

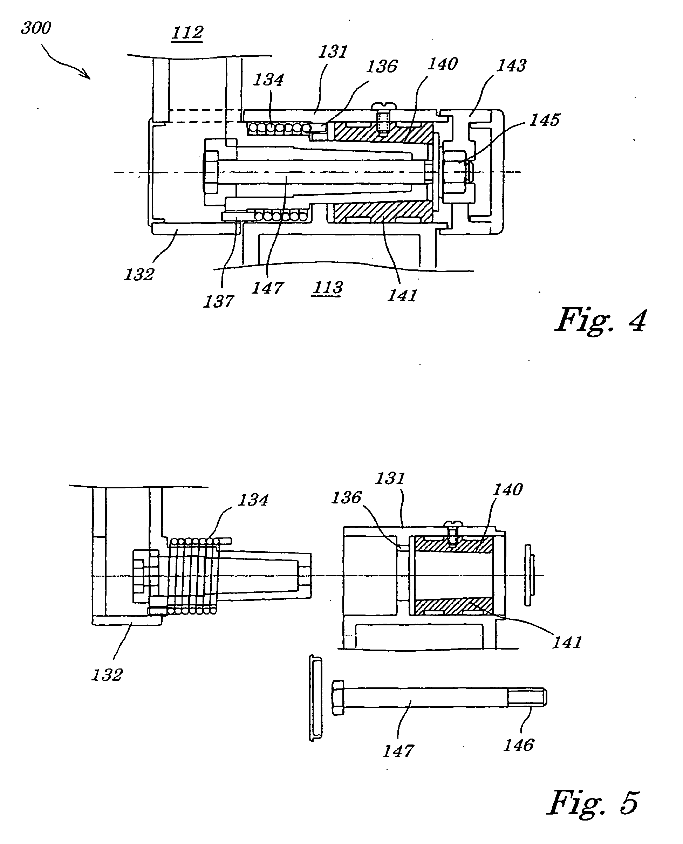

In den Figuren 4 und 5 ist das rechte Ende einer Variante 300 des Drehgelenks 30 der Figur 3 im axialen Längsschnitt bzw. in einer Explosionsansicht dargestellt. Bauteile, welche den in Figur 3 beschriebenen Bauteilen entsprechen oder die gleiche Funktion erfüllen, sind mit der entsprechenden, aber um 100 vergrößerten Bezugsziffer bezeichnet.

Es besteht wieder aus einem ersten Zylinder 131, in den ein zweiter Zylinder 132 eingreift, der jedoch bei dieser Variante das rechte mit dem (nicht dargestellten) linken Ende des Drehgelenks nicht durchgängig, sondern über den Deckel 112 verbindet, während der erste Zylinder 131 wieder mit dem Fußteil 113 verbunden ist. Zwischen dem ersten Zylinder 131 und dem zweiten Zylinder 132 ist eine erste Drehfeder 134 angeordnet, deren beide Enden in Montageöffnungen 136, 137 eingreifen. Der Zylinder 132 weist wiederum einen zum ersten Zylinder 131 weisenden kegelstumpfartigen Endbereich auf, der mit einer komplementären Ausnehmung im ersten Zylinder zusammenwirkt und eine leicht schräg verlaufende Kontaktfläche 140 zwischen erstem Zylinder 131 und zweitem Zylinder 132 bildet.

Die Kontaktfläche 140 wird im dargestellten Beispiel durch einen in den ersten Zylinder eingesetzten Gleitring 141 gebildet, der beispielsweise aus einem Material mit geringer Haftreibung an der Oberfläche, beispielsweise einem fluorierten Kunststoffmaterial wie Polytetrafluorkohlenstoff besteht. Daher kann bei dieser Variante auf eine Beschichtung der Kontaktfläche mit Öl oder Gel verzichtet werden.

Der erste Zylinder 131 weist an seinem freien Ende wieder einen Drehknopf 143 auf, in dem eine Mutter 145 mit Innengewinde drehfest montiert ist. Im montierten Zustand wird der konische Teil des zweiten Zylinders über eine Zugstange 147, die mit einem Aussengwinde 146 versehen ist, das in das Innengewinde der Mutter 145 eingreift, abhängig von der Stellung des Drehknopfes 143 mehr oder weniger tief in die entsprechende Ausnehmung des ersten Zylinders gepresst. Durch Drehen des Drehknopfes 143 kann der Benutzer daher die Reibung an der Kontaktfläche 140 und damit die Dämpfung des Drehgelenks 300 ändern.

## Patentansprüche

1. Vorrichtung zur Nahrungsmittelzubereitung mit einem Gehäuse (11), das eine Gerätebasis (13) und wenigstens einen Deckel (12) aufweist, der über ein Drehgelenk (30) schwenkbar mit der Gerätebasis (13) verbunden ist, wobei die Gerätebasis (13) und der Deckel (12) zumindest eine geschlossene Position, in welcher sich eine Unterseite (19) des Deckels (12) und eine Oberseite (20) der Gerätebasis (13) gegenüberliegen, und eine geöffnete Position, in welcher der Deckel (12) und die Oberseite (20) der Gerätebasis (13) einen Öffnungswinkel (α) einschließen, einnehmen können, wobei das Drehgelenk (30) elastische Rückstellmittel (34,35) umfasst, die auf den Deckel (12) eine Betätigungskraft in Richtung der geöffneten Position ausüben,
wobei das Drehgelenk (30) außerdem Dämpfungsmittel (40) aufweist, welche eine durch die elastischen Rückstellmittel (34,35) bewirkte Bewegung des Deckels (12) dämpfen,
**dadurch gekennzeichnet,**
**dass** die Dämpfungsmittel (40) wenigstens ein Einstellmittel (43) zur Veränderung der auf die Rückstellmittel (34,35) wirkenden Dämpfung umfassen.

2. Vorrichtung gemäß Anspruch 1, **dadurch gekennzeichnet, dass** das Drehgelenk (30) zumindest zwei gegeneinander drehbare Zylinder (31,32;33) umfasst, zwischen denen die elastischen Rückstellmittel (34,35) angreifen, wobei vorzugsweise die Gerätebasis (13) mit dem ersten Zylinder (31;33) und der Deckel (12) mit dem zweiten Zylinder (32) verbunden ist.

3. Vorrichtung gemäß Anspruch 2, **dadurch gekennzeichnet, dass** die elastischen Rückstellmittel eine Drehfeder (34,35) umfassen, deren eines Ende mit dem ersten Zylinder (31;33) und deren anderes Ende mit in den zweiten Zylinder (32) verbunden ist.

4. Vorrichtung gemäß einem der Ansprüche 2 oder 3, **dadurch gekennzeichnet, dass** die Dämpfung der Rückstellmittel (34,35) durch Reibung bewirkt wird, die an einer Kontaktfläche (40) zwischen dem ersten Zylinder (31) und dem zweiten Zylinder (32) bei einer Drehung der Zylinder gegeneinander auftritt.

5. Vorrichtung gemäß einem der Ansprüche 1 bis 4, **dadurch gekennzeichnet, dass** das Einstellmittel (43) derart ausgebildet ist, dass die Reibung an der Kontaktfläche (40) durch das Einstellmittel veränderbar ist.

6. Vorrichtung gemäß Anspruch 5, **dadurch gekennzeichnet, dass** das Einstellmittel einen mit dem ersten Zylinder (31) verbundenen Drehknopf (43) umfasst, der auf eine Zugstange (47) aufgeschraubt ist, welche den zweiten Zylinder (32) hintergreift.

7. Vorrichtung gemäß einem der Ansprüche 1 bis 6, **dadurch gekennzeichnet, dass** in dem Deckel (12) und in der Gerätebasis (13) komplementäre Bauelemente eines Verriegelungsmittels (26,27) angeordnet sind, das den Deckel (12) in der geschlossenen Position hält, wobei vorzugsweise außerdem ein mit dem Verriegelungsmittel (26,27) zusammenwirkendes Betätigungsmittel (14) zum Öffnen des Verriegelungsmittels vorgesehen ist.

8. Vorrichtung gemäß Anspruch 7, **dadurch gekennzeichnet, dass** der Deckel (12) in einer teilweise geöffneten Position festlegbar ist.

9. Vorrichtung gemäß einem der Ansprüche 7 oder 8, **dadurch gekennzeichnet, dass** das Betätigungsmittel (14) als Druckknopf ausgebildet ist.

10. Vorrichtung gemäß einem der Ansprüche 1 bis 9, **dadurch gekennzeichnet, dass** die Gerätebasis als Fußteil (13) ausgebildet ist, wobei wenigstens eine elektrisch beheizbaren Heizplatte (21,22) auf der Oberseite (20) des Fußteils und/oder auf der Unterseite (19) des Deckels so angeordnet ist, dass die Heizplatte (21,22) zumindest in der geschlossenen Position mit den zu erhitzenden Speisen in thermischen Kontakt kommt.

11. Vorrichtung gemäß Anspruch 10, **dadurch gekennzeichnet, dass** Mittel (25) zur Regelung der Temperatur der wenigstens einen Heizplatte (21,22) vorgesehen sind.

12. Vorrichtung gemäß einem der Ansprüche 10 oder 11, **dadurch gekennzeichnet, dass** die wenigstens eine Heizplatte (21,22) austauschbar ist und im eingebauten Zustand in thermischem Kontakt mit in dem Fußteil (13) und/oder in dem Deckel (12) angeordneten Heizelementen steht.

13. Vorrichtung gemäß einem der Ansprüche 10 bis 12, **dadurch gekennzeichnet, dass** die wenigstens eine Heizplatte (21,22) als Formteil ausgebildet ist.

14. Vorrichtung gemäß einem der Ansprüche 10 bis 13, **dadurch gekennzeichnet, dass** die wenigstens eine Heizplatte (21,22) eine Antihaftbeschichtung aufweist.

15. Vorrichtung gemäß einem der Ansprüche 10 bis 16, **dadurch gekennzeichnet, dass** im Boden (28) des Fußteils (13) eine abnehmbare oder ausziehbare Tropfschale (17) angeordnet ist.

## Claims

1. Apparatus for food preparation, having a housing (11) which comprises an appliance base (13) and at least one lid (12), which is pivotably connected to the appliance base (13) via a rotary joint (30), wherein the appliance base (13) and the lid (12) may assume at least one closed position in which an underside (19) of the lid (12) and an upper side (20) of the appliance base (13) are opposite one another, and an open position in which the lid (12) and the upper side (20) of the appliance base (13) enclose an aperture angle (α), the rotary joint (30) comprising resilient restoring means (34, 35) which exert an actuating force on the lid (12) in the direction of the open position,
the rotary joint (30) further comprising damping means (40) which damp a movement of the lid effected by the resilient restoring means (34, 35),
**characterised in that**
the damping means (40) comprise at least one adjusting means (43) for varying the damping effect on the restoring means (34, 35).

2. Apparatus according to claim 1, **characterised in that** the rotary joint (30) comprises at least two cylinders (31, 32; 33) that are rotatable against one another, between which the resilient restoring means (34, 35) engage, the appliance base (13) preferably being connected to the first cylinder (31; 33) and the lid (12) being connected to the second cylinder (32).

3. Apparatus according to claim 2, **characterised in that** the resilient restoring means comprise a rotary spring (34, 35) one end of which is connected to the first cylinder (31; 33) and the other end of which is connected to the second cylinder (32).

4. Apparatus according to one of claims 2 or 3, **characterised in that** the damping of the restoring means (34, 35) is effected by friction which occurs at a contact surface (40) between the first cylinder (31) and the second cylinder (32) during rotation of the cylinders.

5. Apparatus according to one of claims 1 to 4, **characterised in that** the adjusting means (43) are constructed so that the friction on the contact surface (40) can be varied using the adjusting means.

6. Apparatus according to claim 5, **characterised in that** the adjusting means comprise a rotary knob (43) connected to the first cylinder (31), which is screwed onto a connecting rod (47) that engages behind the second cylinder (32).

7. Apparatus according to one of claims 1 to 6, **characterised in that** complementary components of a locking means (26, 27) are arranged in the lid (12) and in the appliance base (13), said locking means holding the lid (12) in the closed position, while preferably an actuating member (14) cooperating with the locking means (26, 27) in order to open the locking means is additionally provided.

8. Apparatus according to claim 7, **characterised in that** the lid (12) can be secured in a partially opened position.

9. Apparatus according to one of claims 7 or 8, **characterised in that** the actuating means (14) are in the form of a push button.

10. Apparatus according to one of claims 1 to 9, **characterised in that** the appliance base is constructed as a base part (13), while at least one electrically heatable hotplate (21, 22) is arranged on the upper side (20) of the base part and/or on the underside (19) of the lid such that the hotplate (21, 22) comes into thermal contact with the food which is to be heated, at least in the closed position.

11. Apparatus according to claim 10, **characterised in that** means (25) are provided for regulating the temperature of the at least one hotplate (21, 22).

12. Apparatus according to one of claims 10 or 11, **characterised in that** the at least one hotplate (21, 22) is exchangeable and in the installed state is in thermal contact with heating elements arranged in the base part (13) and/or in the lid (12).

13. Apparatus according to one of claims 10 to 12, **characterised in that** the at least one hotplate (21, 22) is constructed as a moulded part.

14. Apparatus according to one of claims 10 to 13, **characterised in that** the at least one hotplate (21, 22) has a non-stick coating.

15. Apparatus according to one of claims 10 to 16, **characterised in that** a removable or pull-out drip tray (17) is arranged in the bottom (28) of the base part (13).

## Revendications

1. Dispositif pour préparer de la nourriture comportant un boîtier (11) présentant une base (13) et au moins un couvercle (12) relié à la base (13) par une articulation (30) lui permettant de pivoter, la base (13) et le couvercle (12) pouvant occuper au moins une position fermée dans laquelle le dessous (19) du couvercle (12) et le dessus (20) de la base (13) se font face, et une position ouverte dans laquelle le couvercle (12) et le dessus (20) de la base (23) forment un angle d'ouverture (α), l'articulation (30) comprenant des moyens de rappel élastiques (34, 35) qui exercent, sur le couvercle (12), une force d'actionnement dans le sens de la position ouverte,
l'articulation (30) présentant en outre des moyens d'amortissement (40) qui amortissent un mouvement du couvercle (12) provoqué par les moyens de rappel élastiques (34, 35),
**caractérisé en ce que**
les moyens d'amortissement (40) comprennent au moins un moyen d'ajustement (43) pour modifier l'amortissement agissant sur les moyens de rappel (34, 35).

2. Dispositif selon la revendication 1, **caractérisé en ce que** l'articulation (30) comprend au moins deux cylindres (31, 32 ; 33) pouvant tourner l'un contre l'autre, entre lesquels agissent les moyens de rappel élastiques (34, 35), la base (13) étant reliée de préférence au premier cylindre (31 ; 33) et le couvercle (12) au deuxième cylindre (32).

3. Dispositif selon la revendication 2, **caractérisé en ce que** les moyens de rappel élastiques comprennent un ressort de torsion (34, 35) dont l'une des extrémités est reliée au premier cylindre (31 ; 33) et l'autre dans le deuxième cylindre (32).

4. Dispositif selon l'une quelconque des revendications 2 ou 3, **caractérisé en ce que** l'amortissement des moyens de rappel (34, 35) est provoqué par le frottement qui apparaît sur une surface de contact (40) entre le premier cylindre (31) et le deuxième cylindre (32) lors d'une rotation des cylindres l'un contre l'autre.

5. Dispositif selon l'une quelconque des revendications 1 à 4, **caractérisé en ce que** le moyen d'ajustement (43) est configuré de manière à pouvoir modifier le frottement sur la surface de contact (40).

6. Dispositif selon la revendication 5, **caractérisé en ce que** le moyen d'ajustement comprend un bouton rotatif (43), relié au premier cylindre (31) et vissé sur une barre de traction (47) saisissant le deuxième cylindre (32) par l'arrière.

7. Dispositif selon l'une quelconque des revendications 1 à 6, **caractérisé en ce que** dans le couvercle (12) et dans la base (13), il y a des composants complémentaires d'un moyen de verrouillage (26, 27) qui maintiennent le couvercle (12) en position fermée, alors que, par ailleurs, de préférence un moyen d'actionnement (14), coopérant avec le moyen de verrouillage (26, 27) est prévu pour ouvrir le moyen de verrouillage.

8. Dispositif selon la revendication 7, **caractérisé en ce que** le couvercle (12) peut être immobilisé dans une position partiellement ouverte.

9. Dispositif selon l'une quelconque des revendications 7 ou 8, **caractérisé en ce que** le moyen d'actionnement (14) est un bouton-poussoir.

10. Dispositif selon l'une quelconque des revendications 1 à 9, **caractérisé en ce que** la base est une embase (13), au moins une plaque chauffante électrique (21, 22) étant disposée sur le dessus (20) de l'embase et/ou sur le dessous (19) du couvercle de manière à ce que la plaque chauffante électrique (21, 22) entre en contact thermique, au moins dans la position fermée, avec la nourriture à réchauffer.

11. Dispositif selon la revendication 10, **caractérisé par** des moyens (25) destinés à régler la température de l'au moins une plaque chauffante (21, 22).

12. Dispositif selon l'une quelconque des revendications 10 ou 11, **caractérisé en ce que** l'au moins une plaque chauffante (21, 22) peut être remplacée et, lorsqu'elle est en place, est en contact thermique avec des éléments chauffants disposés dans l'embase (13) et/ou dans le couvercle (12).

13. Dispositif selon l'une quelconque des revendications 10 à 12, **caractérisé en ce que** l'au moins une plaque chauffante (21, 22) est une pièce moulée.

14. Dispositif selon l'une quelconque des revendications 10 à 13, **caractérisé en ce que** l'au moins une plaque chauffante (21, 22) présente un revêtement antiadhésif.

15. Dispositif selon l'une quelconque des revendications 10 à 16, **caractérisé en ce qu'**un tiroir de récupération (17) amovible ou escamotable est disposé dans le fond (28) de l'embase (13).
